# EUROPÄISCHE PATENTANMELDUNG

(11) **EP 4 778 676 A1**
(43) Veröffentlichungstag der Anmeldung: **22.07.2026**
(21) Anmeldenummer: 25152968.1
(22) Anmeldetag: 20.01.2025
(51) Int. Cl.: B25B 27/10, F16L 39/00

(54) **WERKZEUGSET ZUR HERSTELLUNG VON PRESSVERBINDUNGEN ZWISCHEN ROHRENDEN**

(71) Anmelder: Haelok AG, 8952 Schlieren (CH)
(72) Erfinder: Bühler, Andreas, 8032 Zürich (CH); Giesler, Steffen, 72458 Albstadt (DE); Sauter, Bernhard, 72555 Metzingen (DE)
(74) Vertreter: Ullrich, Gerhard

(57) **Zusammenfassung**

Die Erfindung betrifft ein Werkzeugset mit einem Presswerkzeug **(6)** und darin integriertem Vorschubmechanismus zur Herstellung von Pressverbindungen zwischen einem Rohrende **(810)** eines ersten Rohrstücks **(81)** mit einem Rohrende **(910)** eines zweiten Rohrstücks **(91)** sowie einem Rohrende **(820)** eines dritten Rohrstücks **(82)** mit einem Rohrende **(920)** eines vierten Rohrstücks **(92),** jeweils mit Einfügung eines Fittingbausatzes **(1).** Hierbei bilden das erste Rohrstück **(81)** mit dem dritten Rohrstück **(82)** bzw. das zweite Rohrstück **(91)** mit dem vierten Rohrstück **(92)** Leitungsteile eines ersten Rohrpaars **(8)** bzw. eines zweiten Rohrpaars **(9)** innerhalb eines Rohrleitungsnetzes, wie es u.a. für Fernwärmenetze mit Zu- und Rückleitungen gebaut wird.

## Beschreibung

### Anwendungsgebiet der Erfindung

Die Erfindung betrifft ein Werkzeugset mit einem Presswerkzeug und darin integriertem Vorschubmechanismus zur Herstellung von Pressverbindungen zwischen einem Rohrende eines ersten Rohrstücks mit einem Rohrende eines zweiten Rohrstücks sowie einem Rohrende eines dritten Rohrstücks mit einem Rohrende eines vierten Rohrstücks, jeweils mit Einfügung eines Fittingbausatzes. Derartige Arbeiten mit grossdimensionierten Rohrdurchmessern fallen z.B. bei Fernwärmenetzen mit Zu- und Rückleitungen an.

### Stand der Technik

Die Herstellung von Pressverbindungen zwischen einem ersten und einem zweiten Rohrpaar, die zueinander koaxial ausgerichtet sind, ist bisher üblich, indem mit einem Presswerkzeug und zwei einzufügenden Fittingbausätzen, in aufeinanderfolgenden Arbeitsschritten, die Pressverbindungen der beiden jeweils miteinander zu verbindenden Rohrenden des ersten und zweiten Rohrpaars geschaffen werden. Dies bedingen hohen Zeitaufwand bei mehrfachem Um- und Ansetzen des aufgrund der zu verarbeitenden grossen Rohrdimensionen relativ schweren Presswerkzeugs an den miteinander druckdicht und mechanisch belastbar zu verbindenden Rohrpaaren, wie sie z.B. bei Fernwärmenetzen mit Zu- und Rückleitungen verbaut werden.

### Aufgabe der Erfindung

Der vorliegenden Erfindung liegt daher die Aufgabe zugrunde, ein Werkzeugset zu schaffen, mit welchem die Herstellung von Pressverbindungen für Rohrnetze, wie im obigen Kapitel beschrieben, effizienter ermöglicht wird. Bestandteil des Werkzeugsets sei ein Presswerkzeug, wie es im Prinzip Gegenstand der EP 3 697 572 B1 ist und verarbeitet werden Fittingbausätze, wie sie im Prinzip in der WO 2018/209 450 A1 offenbart sind.

### Übersicht über die Erfindung

Zum Werkzeugset gehören ein Presswerkzeug mit darin integriertem Vorschubmechanismus zur Herstellung von Pressverbindungen zwischen einem Rohrende eines ersten Rohrstücks mit einem Rohrende eines zweiten Rohrstücks sowie einem Rohrende eines dritten Rohrstücks mit einem Rohrende eines vierten Rohrstücks, jeweils mit Einfügung eines Fittingbausatzes. Das erste Rohrstück mit dem dritten Rohrstück bzw. das zweite Rohrstück mit dem vierten Rohrstück sind Leitungsteile eines ersten Rohrpaars bzw. eines zweiten Rohrpaars.

Ein Fittingbausatz umfasst:
a) ein hülsenartiges Zwischenstück, das einen äusseren Einschnitt besitzt und zur innerlichen, axial eingeführten Aufnahme des Rohrendes des ersten Rohrstücks und koaxial dazu zur Aufnahme des Rohrendes des zweiten Rohrstücks bzw. zur Aufnahme des Rohrendes des dritten Rohrstücks und koaxial dazu zur Aufnahme des Rohrendes des vierten Rohrstücks bestimmt ist; und
b) einen ersten Pressring und einen zweiten Pressring, die mittels des Werkzeugsets zum Aufschieben über das Zwischenstück mit der Wirkung des Entstehens einer druckdichten und mechanisch belastbaren Pressverbindung zwischen:
   - dem Zwischenstück und dem Rohrende des ersten Rohrstücks sowie dem Rohrende des zweiten Rohrstücks; bzw.
   - dem Zwischenstück und dem Rohrende des dritten Rohrstücks sowie dem Rohrende des vierten Rohrstücks.

Hierbei dient das Werkzeugset bei im jeweiligen Zwischenstück steckenden Rohrende des ersten bzw. dritten Rohrstücks oder bei im jeweiligen Zwischenstück steckenden Rohrende des zweiten bzw. vierten Rohrstücks zum gleichzeitigen Aufschieben beider erster Pressringe bzw. beider zweiter Pressringe auf das jeweilige Zwischenstück.

Nachstehend sind besonders vorteilhafte Details zum erfindungsgemässen Werkzeugset genannt:
Das Werkzeugset umfasst:
a) das Presswerkzeug, das sich von einem Offenzustand in den betriebsbereite Schliesszustand bewegen lässt;
b) ein erstes Inlay, welches bestimmt ist:
   - zum Formschluss mit den äusseren Einschnitten beider Zwischenstücke der zwei Fittingbausätze; und
   - zusammen mit den zwei Fittingbausätzen zur axial arretierten Aufnahme im Presswerkzeug; und
c) ein zweites Inlay, welches bestimmt ist:
   - zum axial verschiebbaren Umfassen des zweiten Rohrpaars bzw. des ersten Rohrpaars;
   - zusammen mit dem umfassten zweiten Rohrpaar bzw. ersten Rohrpaar zur axial verschiebbaren Aufnahme im Presswerkzeug; und
   - angetrieben vom Vorschubmechanismus im Presswerkzeug, zum gleichzeitigen Aufschieben beider zweiter Pressringe bzw. beider erster Pressringe auf das jeweilige Zwischenstück.

Das Presswerkzeug besteht aus zwei Hälften, die sich mittels Kupplungsorganen, welche vorzugsweise lösbar sind, miteinander verbinden und verriegeln lassen. Das erste Inlay besteht aus zwei Hälften, die sich von einem Offenzustand in den in die äusseren Einschnitte beider Zwischenstücke der zwei zueinander parallel angeordneten Fittingbausätze formschlüssig eingreifenden Schliesszustand bewegen lassen und miteinander verbindende Kupplungsorgane aufweisen. Das zweite Inlay besteht ebenfalls aus zwei Hälften, die sich von einem Offenzustand in den das zweite Rohrpaar bzw. erste Rohrpaar umgreifenden Schliesszustand bewegen lassen und miteinander verbindende Kupplungsorgane aufweisen.

Der Vorschubmechanismus im Presswerkzeug ist hydraulisch ausgebildet.

Am ersten Inlay hat jede der zwei Hälften eine erste halbkreisförmige Aussparung und eine zweite halbkreisförmige Aussparung, wobei:
- beide ersten halbkreisförmigen Aussparungen und beide zweiten halbkreisförmigen Aussparungen sich im Schliesszustand des ersten Inlays jeweils zu einer Vollkreisaussparung ergänzen; und
- jeweils eine der Vollkreisaussparungen in komplementärer Dimension in den äusseren Einschnitt am jeweiligen Zwischenstück der zwei Fittingbausätze formschlüssig eingreift.

Am ersten Inlay hat jede der zwei Hälften zwischen der ersten halbkreisförmigen Aussparung und der zweiten halbkreisförmigen Aussparung einen Abstandssteg, wobei:
- die beiden Abstandsstege der zwei Hälften im Schliesszustand des ersten Inlays zueinander gerichtet sind; und
- der von einem Brückensteg definierte Axialabstand zwischen den Rohrpaaren und somit auch zwischen den zwei Fittingbausätzen zu den beiden Abstandsstegen der zwei Hälften im Schliesszustand des ersten Inlays äquivalent ist.

Am zweiten Inlay hat jede der zwei Hälften eine erste halbkreisförmige Aussparung und eine zweite halbkreisförmige Aussparung, wobei:
- beide ersten halbkreisförmigen Aussparungen und beide zweiten halbkreisförmigen Aussparungen sich im Schliesszustand des zweiten Inlays jeweils zu einer Vollkreisaussparung ergänzen; und
- beide Vollkreisaussparungen zusammen das erste Rohrstück und das dritte Rohrstück des ersten Rohrpaars bzw. das zweite Rohrstück und das vierte Rohrstück des zweiten Rohrpaars darauf axial vom Vorschubmechanismus im Presswerkzeug verschiebbar umfassen.

Am zweiten Inlay hat jede der zwei Hälften zwischen der ersten halbkreisförmigen Aussparung und der zweiten halbkreisförmigen Aussparung einen Abstandssteg, wobei:
- die beiden Abstandsstege der zwei Hälften im Schliesszustand des zweiten Inlays zueinander gerichtet sind; und
- der von einem Brückensteg definierte Axialabstand zwischen den Rohrpaaren zu den beiden Abstandsstegen der zwei Hälften im Schliesszustand des zweiten Inlays äquivalent ist.

Das Presswerkzeug und das erste Inlay und das zweite Inlay sowie die Fitting Bausätze sind in deren Dimensionen äquivalent an die beiden Rohrpaare gestaltbar.

Vom ersten Rohrpaar werden das Rohrende des ersten Rohrstücks und das Rohrende des dritten Rohrstücks sowie vom zweiten Rohrpaar das Rohrende des zweiten Rohrstücks und das Rohrende des vierten Rohrstücks zusammen mit den jeweils einzufügenden Fittingbausatz bei der Herstellung der Pressverbindungen ohne Ummantelung, ohne von der Ummantelung eingebetteter Isolation und ohne eine Stütz-Verbindung zwischen dem jeweiligen, in der Ummantelung und Isolation geführten Rohrpaar verarbeitet. Nach hergestellten Pressverbindungen werden zumindest die bisher fehlende Isolation und die Ummantelung am bisher freiliegenden Bereich, der sich vom ersten und dritten Rohrstück über die beiden Fittingbausätze bis zum zweiten und vierten Rohrstück erstreckt, ergänzt.

### Kurzbeschreibung der beigefügten Zeichnungen

Es zeigen:
- Figur 1A: - ein erstes und ein zweites Rohrpaar mit zwei zwischengefügten Fittingbausätzen und im Montagebereich der Rohrpaare entfernter Ummantelung und Isolation, als Prinzipdarstellung vorbereitender Situation;
- Figur 1B: - die Anordnung gemäss Figur 1A in zusammengestecktem, noch unverpresstem Zustand;

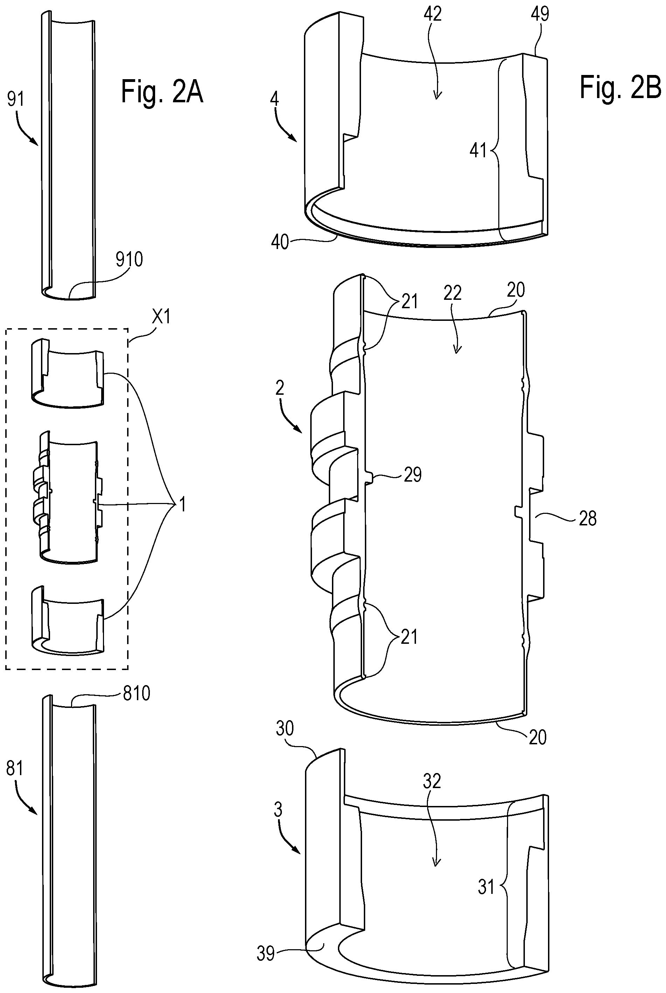

- Figur 2A: - einen Fittingbausatz, bestehend aus einem Zwischenstück - in Gestalt einer geraden Muffe - und zwei Pressringen, mit zwei zugeordneten Rohrstücken, in perspektivischer Explosivdarstellung, im Vertikalschnitt;
- Figur 2B: - das vergrösserte Detail X1 aus Figur 2A;

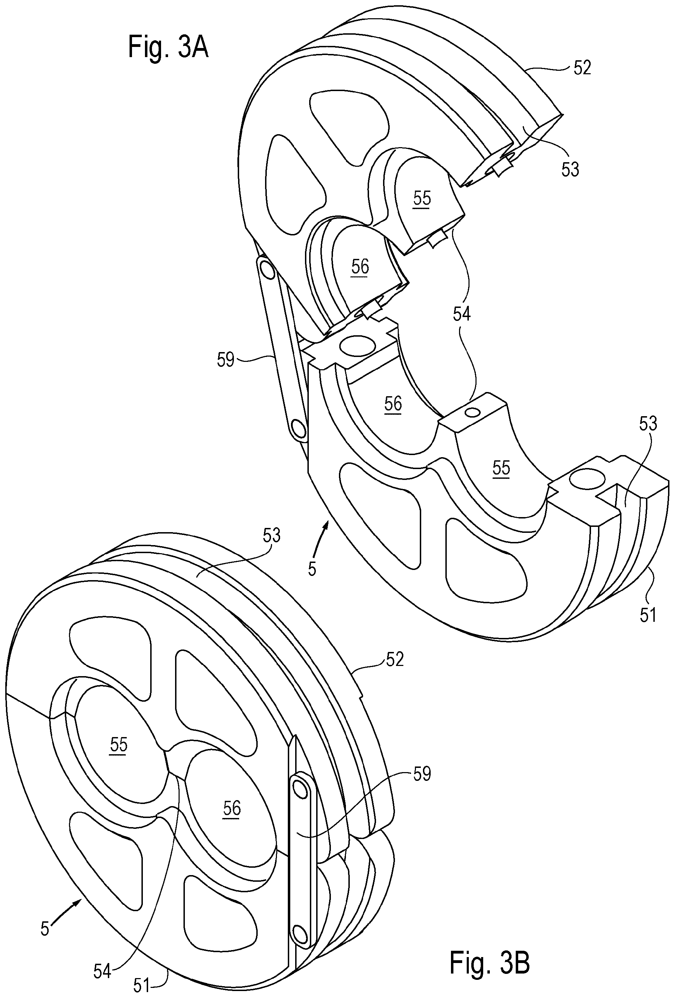

- Figur 3A: - das erste Inlay, im Offenzustand, in Perspektivdarstellung;
- Figur 3B: - das erste Inlay, in geschlossenem Zustand;

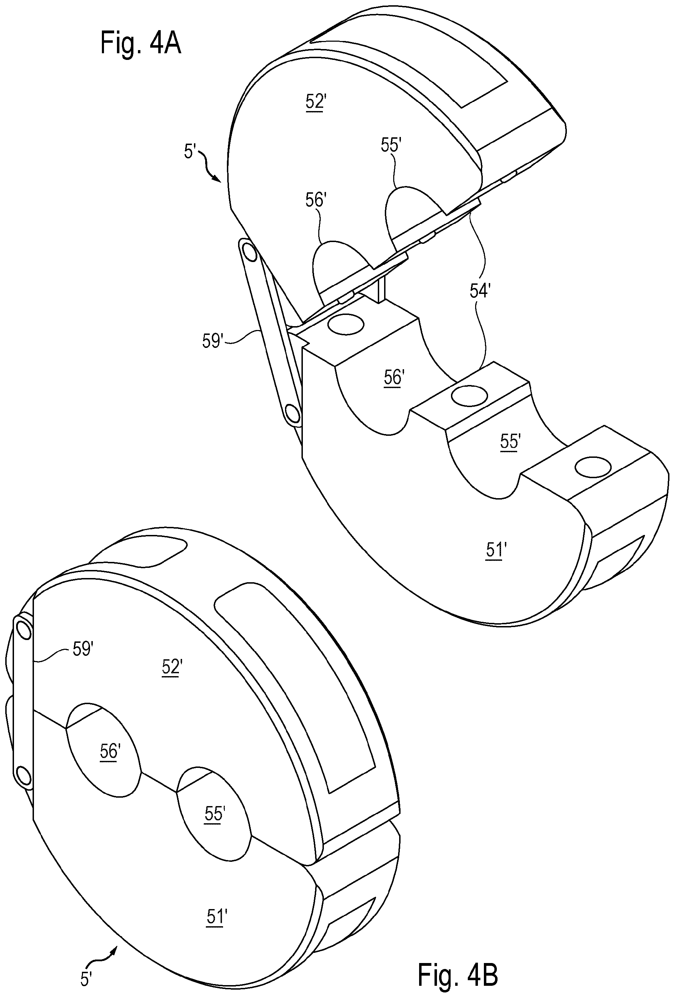

- Figur 4A: - das zweite Inlay, im Offenzustand, in Perspektivdarstellung;
- Figur 4B: - das zweite Inlay, in geschlossenem Zustand;
- Figur 5A: - das erste Inlay, im Offenzustand, mit eingelegten zwei Fittingbausätzen, in Perspektivdarstellung;
- Figur 5B: - die Anordnung gemäss Figur 5A, mit geschlossenem erstem Inlay;
- Figur 6: - die Herstellung der Pressverbindungen - erster Montageschritt;
- Figur 7: - die Herstellung der Pressverbindungen - zweiter Montageschritt;
- Figur 8: - die Herstellung der Pressverbindungen - dritter Montageschritt;
- Figur 9: - die Herstellung der Pressverbindungen - vierter Montageschritt;
- Figur 10: - das zweite Inlay das zweite Rohrpaar umgreifend gemäss Figur 6 und das erste Inlay die beiden Fittingbausätze umgreifend gemäss Figur 7, in das offene Presswerkzeug eingesetzt;
- Figur 11: - die Anordnung gemäss Figur 10 mit geschlossenem Presswerkzeug;

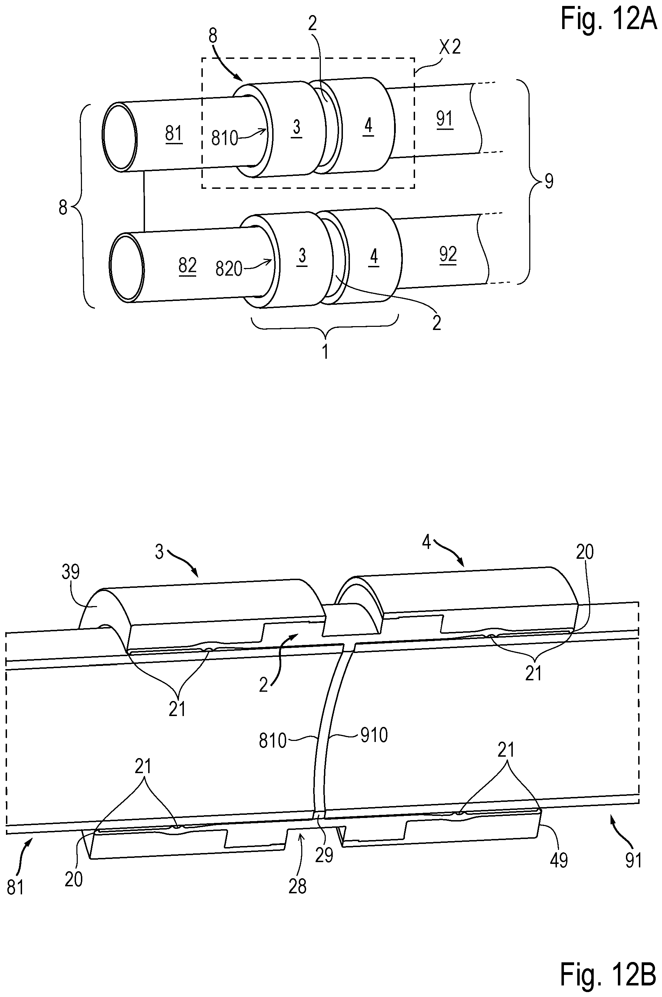

- Figur 12A: - den Montagebereich aus Figur 1B, als Prinzipdarstellung in verpresster Situation, weiterhin noch ohne Ummantelung und Isolation; und
- Figur 12B: - das vergrösserte Detail X2 aus Figur 12A.

### Ausführungsbeispiel

Mit Bezug auf die beiliegenden Zeichnungen erfolgt nachstehend die detaillierte Beschreibung eines Ausführungsbeispiels zum geschaffenen erfindungsgemässen Werkzeugset zur Herstellung von Pressverbindungen an Rohrenden.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A und 1B

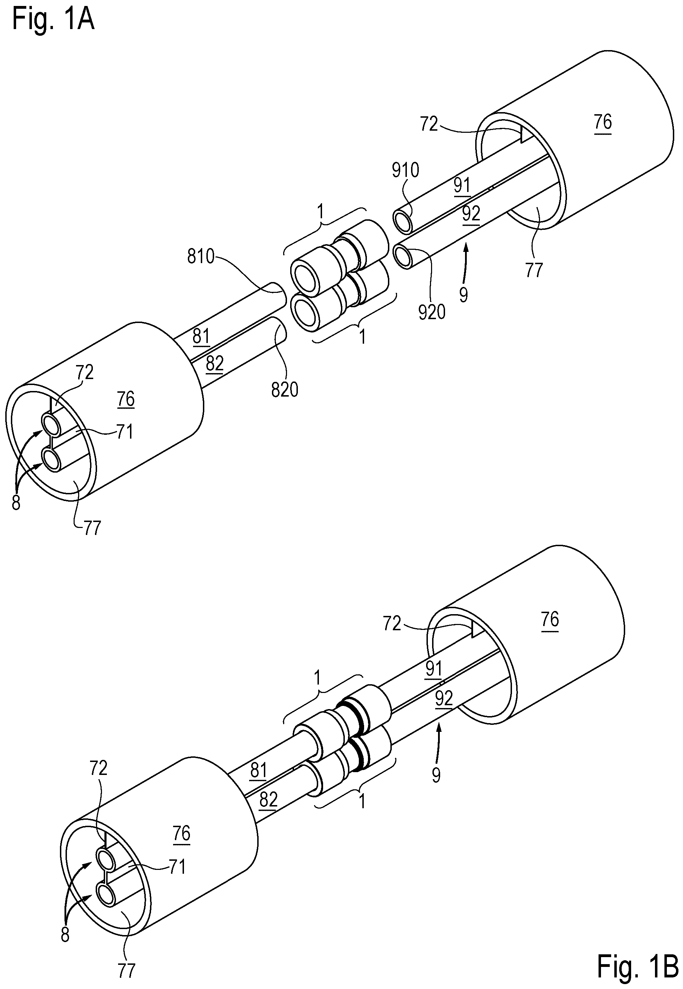

Dargestellt sind in diesem Figurenpaar zunächst mit Figur 1A in vorbereitender Situation ein erstes Rohrpaar **8** und ein zweites Rohrpaar **9** mit zwei zwischengefügten Fittingbausätzen **1** und im Montagebereich der Rohrpaare **8,9** entfernter Ummantelung **76** und Isolation **77.** Das erste Rohrstück **81** des ersten Rohrpaars **8** sowie das zweite Rohrstück **91** des zweiten Rohrpaars **9** sind jeweils mit einer Stützverbindung **72** innerhalb der Ummantelung **76** positioniert, d.h. ca. zentrisch aufgehangen. Das erste Rohrstück **81** und das dritte Rohrstück **83** des ersten Rohrpaars **8** sowie das zweite Rohrstück **91** und das vierte Rohrstück **92** des zweiten Rohrpaars **9** sind jeweils durch einen Brückensteg **71** miteinander verbunden. Die Rohrstücke **81,82;91,92** besitzen die koaxial zueinander gerichteten Rohrenden **810,820;910,920.** In der vorbereitenden Montagesituation sind die beiden Fittingbausätze **1** zwischen den sich gegenüberstehenden Rohrenden **810,910;820,920** positioniert.

In Figur 1B ist die Anordnung zusammengesteckt, noch in unverpresstem Zustand. Die Rohrenden **810,910** stecken im oberen Fittingbausatz **1** und die Rohrenden **820,920** im unteren Fittingbausatz **1.**

### Figuren 2A und 2B

Der Fittingbausatz **1,** besteht aus einem Zwischenstück **2** - in Gestalt einer geraden Muffe - und dem ersten Pressring **3** und dem zweiten Pressring **4.** Zugeordnet sind das erste Rohrstück **81** mit seinem Rohrende **810** sowie das zweite Rohrstück **91** mit seinem Rohrende **910.** Das hülsenartige Zwischenstück **2** hat den Hohlraum **22** und die beiden Stirnflächen **20** an den Enden. Ferner besitzt es eine mehrfach stark konturierte Aussenfläche mit dem Einschnitt **28** und eine weniger stark konturierte Innenfläche mit den Krallkonturen **21** und dem Anschlag **29.** Vorzugsweise besteht das Zwischenstück **2** auch aus Edelstahl.

Die beiden Pressringe **3,4** haben eine glatte zylindrische Aussenfläche sowie eine mehrfach deutlich konturierte Innenfläche, welche den Hohlraum **32** umschliesst. Ein Ende weist die Stirnfläche **30,40** auf das andere Ende die Endfläche **39,49.** Vorzugsweise bestehen auch die Pressringe **3,4** aus Edelstahl.

### Figuren 3A und 3B

Am ersten Inlay **5** hat jede der zwei Hälften **51,52** eine erste halbkreisförmige Aussparung **55** und eine zweite halbkreisförmige Aussparung **56.** Beide ersten halbkreisförmigen Aussparungen **55,55** und beide zweiten halbkreisförmigen Aussparungen **56,56** ergänzen sich im Schliesszustand jeweils zu einer Vollkreisaussparung. Die beiden Hälften **51,52** weisen miteinander verbindende Kupplungsorgane **59** auf. Jeweils eine der Vollkreisaussparungen sind dazu bestimmt, in komplementärer Dimension in den äusseren Einschnitt **28** am jeweiligen Zwischenstück **2** der zwei Fittingbausätze **1** formschlüssig einzugreifen. Am ersten Inlay **5** hat jede der zwei Hälften **51,52** zwischen der ersten halbkreisförmigen Aussparung **55** und der zweiten halbkreisförmigen Aussparung **56** einen Abstandssteg **54.** Die beiden Abstandsstege **54** der zwei Hälften **51,52** sind im Schliesszustand zueinander gerichtet sind. Der vom Brückensteg **71** definierte Axialabstand zwischen den Rohrpaaren **8,9** und somit auch zwischen den zwei Fittingbausätzen **1** ist zu den beiden Abstandsstegen **54** der zwei Hälften **51,52** im Schliesszustand äquivalent. Die sich äusserlich über beide Hälften **51,52** erstreckende, zueinander ergänzende Radialnut 53 ist zur Arretierung innerhalb des Presswerkzeugs **6** bestimmt.

### Figuren 4A und 4B

Am zweiten Inlay **5'** hat jede der zwei Hälften **51',52'** eine erste halbkreisförmige Aussparung **55'** und eine zweite halbkreisförmige Aussparung **56'.** Beide ersten halbkreisförmigen Aussparungen **55',55'** und beide zweiten halbkreisförmigen Aussparungen **56',56'** ergänzen sich im Schliesszustand jeweils zu einer Vollkreisaussparung. Beide Vollkreisaussparungen zusammen umfassen das erste Rohrstück **81** und das dritte Rohrstück **82** des ersten Rohrpaars **8** bzw. das zweite Rohrstück **91** und das vierte Rohrstück **92** des zweiten Rohrpaars **9** darauf axial vom Vorschubmechanismus im Presswerkzeug **6** verschiebbar. Jede der zwei Hälften **51',52'** hat zwischen der ersten halbkreisförmigen Aussparung **55'** und der zweiten halbkreisförmigen Aussparung **56'** einen Abstandssteg **54'.** Die beiden Abstandsstege **54'** der zwei Hälften **51',52'** sind im Schliesszustand zueinander gerichtet. Der vom Brückensteg **71** definierte Axialabstand zwischen den Rohrpaaren **8,9** ist zu den beiden Abstandsstegen **54'** der zwei Hälften **51',52'** im Schliesszustand äquivalent. Zum Bewegen der zwei Hälften **51',52'** von einem Offenzustand in den das zweite Rohrpaar **9** bzw. erste Rohrpaar **8** umgreifenden Schliesszustand sind miteinander verbindende Kupplungsorgane **59'** vorhanden.

### Figuren 5A und 5B

Bereits im Offenzustand des ersten Inlays **5** greift der Abstandssteg **54** seiner ersten Hälfte **51** in den jeweils unteren Anteil des Einschnitts **28** der beiden Zwischenstücke **2** von den zwei Fittingbausätzen **1** ein. Im geschlossenen Zustand des ersten Inlays **5** liegen die Abstandsstege **54** beider Hälften **51,52** formschlüssig in den Einschnitten **28** der beiden Zwischenstücke **2.**

### Figuren 6 bis 9

Diese Figurenfolge illustriert die Herstellung der Pressverbindungen in den Montageschritten.

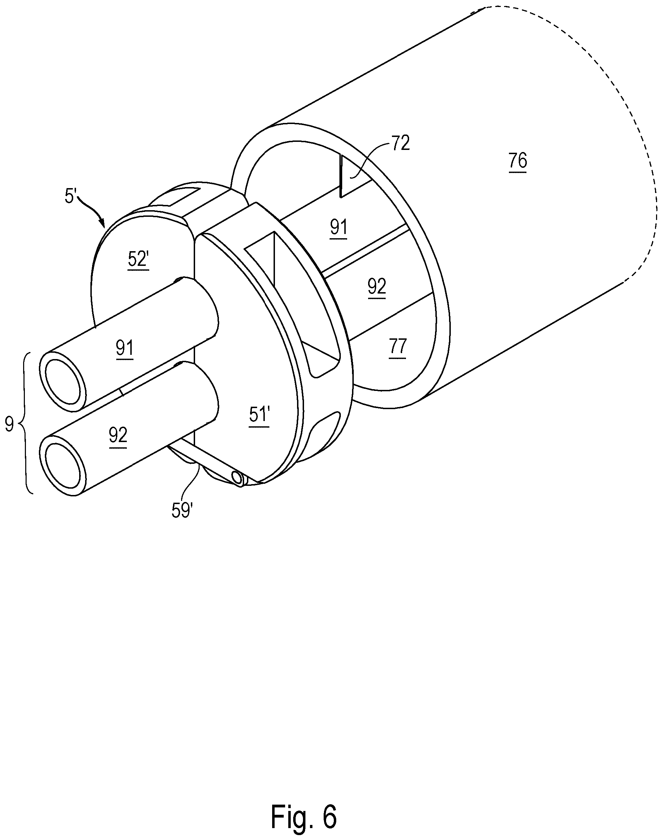

### Figur 6 - erster montageschritt

Das zweite Inlay **5'** ist auf beide Rohrstücke **91,92** aufgesetzt und befindet sich im geschlossenen Zustand, wobei die Abstandsstege **54'** den Abstand zwischen beiden Rohrstücken **91,92** überbrücken.

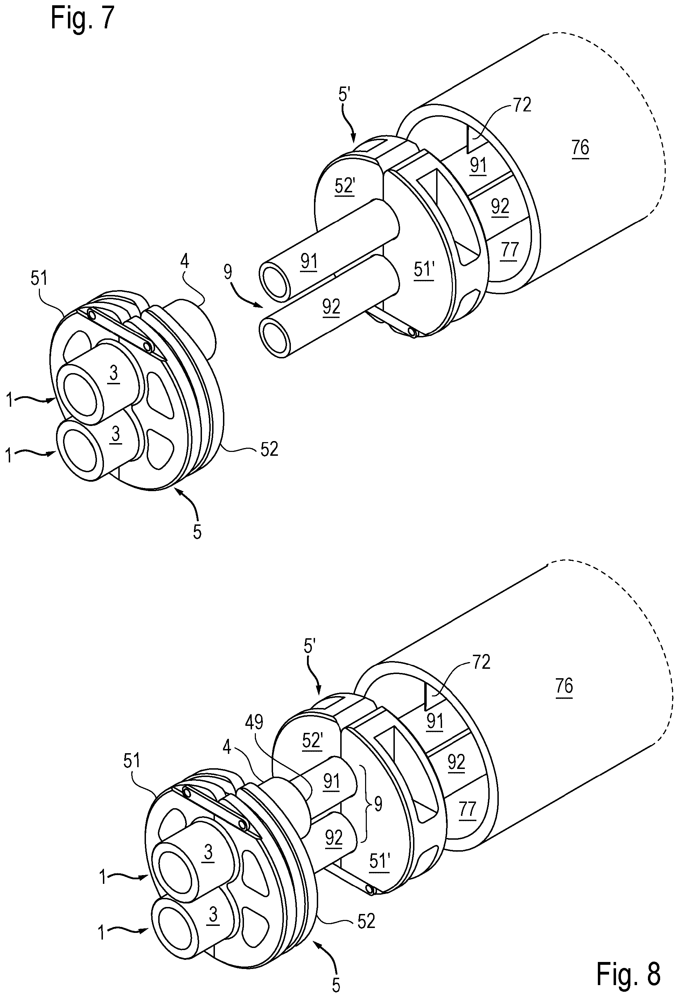

### Figur 7 - zweiter Montageschritt

Das erste Inlay Inlay **5** ist auf beide Fittingbausätze **1** aufgesetzt und befindet sich im geschlossenen Zustand, wobei die Abstandsstege **54** formschlüssig in die Einschnitte **28** eingreifen. Und die Baugruppe aus erstem Inlay **5** und Fittingbausätzen **1** ist der Baugruppe gemäss Figur 6 axial ausgerichtet angenähert.

### Figur 8 - dritter Montageschritt

Die Baugruppe aus erstem Inlay **5** und Fittingbausätzen **1** ist an die Baugruppe gemäss Figur 6 herangeschoben, wobei die Rohrenden **910,920** vom zweiten Rohrpaar **9** bis an die Anschläge **29** in den beiden Zwischenstücken **2** eingeschoben sind.

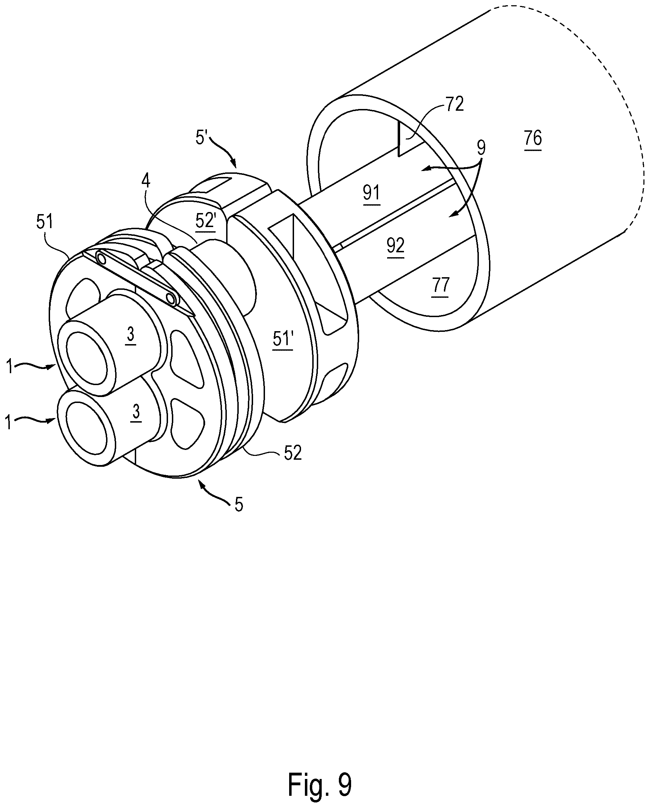

### Figur 9 - vierter Montageschritt

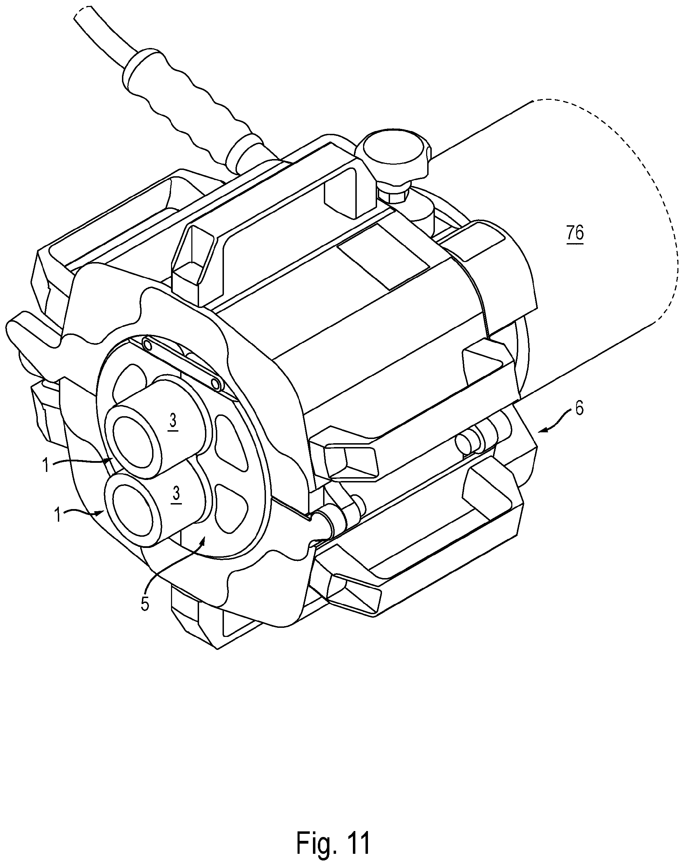

Es wird die Anordnung gemäss Figur 11 angenommen.

Durch den hydraulischen Vorschubmechanismus im Presswerkzeug **6** wurde das zweite Inlay **5',** die beiden Rohrstücke **91,92** umgreifend und schlittenartig auf diesen gegen die Endflächen **49** beiden zweiten Pressringe **4** gedrückt, bis die Pressringe **4** in ihre bestimmungsgemässe Endlage auf der jeweils einen Seite der Zwischenstücke **2** erreicht haben und die betreffenden Rohrenden **910,920** mit den zwei Fittingbausätzen **1** verpresst sind. Das Verpressen der anderen beiden Rohrenden **810,820** erfolgt durch Positionsumkehrung des Presswerkzeugs **6** mit Vorschub gegen die Endflächen **39** beiden ersten Pressringe **3.**

### Figuren 10 und 11

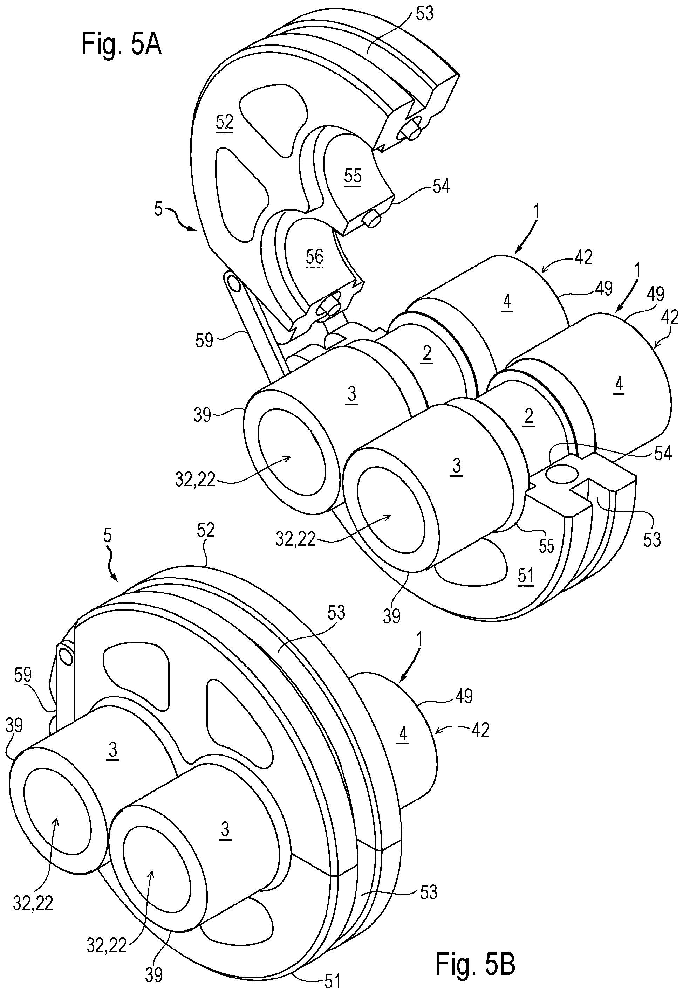

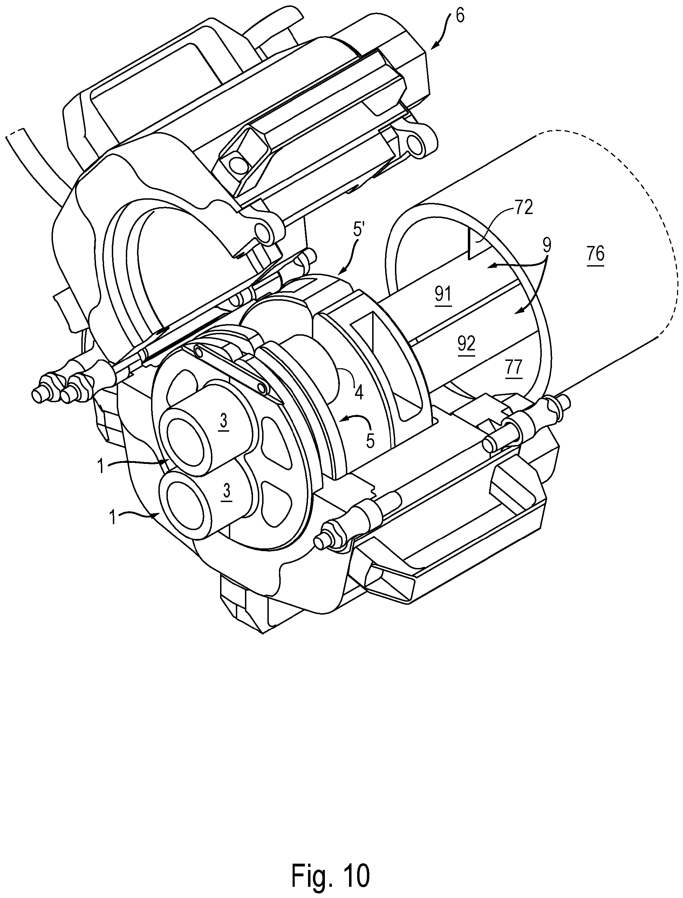

In diesem Figurenpaar ist das mit dem Presswerkzeug **6** komplettierte Werkzeugset gezeigt. Das zweite Inlay **5'** umgreift das zweite Rohrpaar **9,** wie in Figur 6 gezeigt und das erste Inlay **5** umgreift die beiden Fittingbausätze **1,** wie in Figuren 5B und 7 gezeigt, alles im offenen Presswerkzeug **6** aufgenommen (siehe Figur 10). In Figur 11 befindet sich das Presswerkzeug **6** in geschlossenem Zustand.

### Figuren 12A und 12B

Im komplett verpressten Zustand des Rohrnetzes stehen die jeweils einander zugewandten Rohrenden **810,910;820,920** am Anschlag **29** im jeweiligen der beiden Fittingbausätzen **1** an. Die jeweils beiden Pressringe **3,4** sind von seiten der beiden Stirnflächen **20** bis in die Endlage auf das jeweilige Zwischenstück **2** aufgeschoben. Die Krallkonturen **21** des jeweiligen Zwischenstücks **2** haben sich in die Oberfläche der Rohrenden **810,910;820,920** eingegraben, so dass druckdichte und mechanisch belastbare Pressverbindungen entstanden sind.

## Patentansprüche

1. Werkzeugset mit einem Presswerkzeug **(6)** und darin integriertem Vorschubmechanismus zur Herstellung von Pressverbindungen zwischen einem Rohrende **(810)** eines ersten Rohrstücks **(81)** mit einem Rohrende **(910)** eines zweiten Rohrstücks **(91)** sowie einem Rohrende **(820)** eines dritten Rohrstücks **(82)** mit einem Rohrende **(920)** eines vierten Rohrstücks **(92),** jeweils mit Einfügung eines Fittingbausatzes **(1),** wobei:
a) das erste Rohrstück **(81)** mit dem dritten Rohrstück **(82)** bzw. das zweite Rohrstück **(91)** mit dem vierten Rohrstück **(92)** Leitungsteile eines ersten Rohrpaars **(8)** bzw. eines zweiten Rohrpaars **(9)** sind;
b) ein Fittingbausatz **(1)** umfasst:
ba) ein hülsenartiges Zwischenstück **(2),** das einen äusseren Einschnitt **(28)** besitzt und zur innerlichen, axial eingeführten Aufnahme des Rohrendes **(810)** des ersten Rohrstücks **(81)** und koaxial dazu zur Aufnahme des Rohrendes **(910)** des zweiten Rohrstücks **(91)** bzw. zur Aufnahme des Rohrendes **(820)** des dritten Rohrstücks **(82)** und koaxial dazu zur Aufnahme des Rohrendes **(920)** des vierten Rohrstücks **(92)** bestimmt ist; und
bb) einen ersten Pressring **(3)** und einen zweiten Pressring **(4),** die mittels des Werkzeugsets zum Aufschieben über das Zwischenstück **(81)** mit der Wirkung des Entstehens einer druckdichten und mechanisch belastbaren Pressverbindung zwischen:
- dem Zwischenstück **(2)** und dem Rohrende **(810)** des ersten Rohrstücks **(81)** sowie dem Rohrende **(910)** des zweiten Rohrstücks **(91);** bzw.
- dem Zwischenstück **(2)** und dem Rohrende **(820)** des dritten Rohrstücks **(82)** sowie dem Rohrende **(920)** des vierten Rohrstücks **(92);** wobei:
c) das Werkzeugset bei im jeweiligen Zwischenstück **(2)** steckenden Rohrende **(810,820)** des ersten bzw. dritten Rohrstücks **(81,82)** oder bei im jeweiligen Zwischenstück **(2)** steckenden Rohrende **(910,920)** des zweiten bzw. vierten Rohrstücks **(81,82)** zum gleichzeitigen Aufschieben beider erster Pressringe **(3)** bzw. beider zweiter Pressringe **(4)** auf das jeweilige Zwischenstück **(2)** dient.

2. Werkzeugset nach Anspruch 1, **dadurch gekennzeichnet, dass** es umfasst:
a) das Presswerkzeug **(6),** das sich von einem Offenzustand in den betriebsbereite Schliesszustand bewegen lässt;
b) ein erstes Inlay **(5),** welches bestimmt ist:
ba) zum Formschluss mit den äusseren Einschnitten **(28)** beider Zwischenstücke **(2)** der zwei Fittingbausätze **(1);** und
bb) zusammen mit den zwei Fittingbausätzen **(1)** zur axial arretierten Aufnahme im Presswerkzeug **(6);** und
c) ein zweites Inlay **(5'),** welches bestimmt ist:
ca) zum axial verschiebbaren Umfassen des zweiten Rohrpaars **(9)** bzw. des ersten Rohrpaars **(8);**
cb) zusammen mit dem umfassten zweiten Rohrpaar **(9)** bzw. ersten Rohrpaar **(8)** zur axial verschiebbaren Aufnahme im Presswerkzeug **(6);** und
cc) angetrieben vom Vorschubmechanismus im Presswerkzeug **(6),** zum gleichzeitigen Aufschieben beider zweiter Pressringe **(4)** bzw. beider erster Pressringe **(3)** auf das jeweilige Zwischenstück **(2).**

3. Werkzeugset nach zumindest einem der Ansprüche 1 und 2, **dadurch gekennzeichnet, dass**
a) das Presswerkzeug **(6)** aus zwei Hälften besteht, die sich mittels Kupplungsorganen, welche vorzugsweise lösbar sind, miteinander verbinden und verriegeln lassen;
b) das erste Inlay **(5)** aus zwei Hälften **(51,52)** besteht, die sich von einem Offenzustand in den in die äusseren Einschnitte **(28)** beider Zwischenstücke **(2)** der zwei zueinander parallel angeordneten Fittingbausätze **(1)** formschlüssig eingreifenden Schliesszustand bewegen lassen und miteinander verbindende Kupplungsorgane **(59)** aufweisen;
c) das zweite Inlay **(5')** aus zwei Hälften **(51',52')** besteht, die sich von einem Offenzustand in den das zweite Rohrpaar **(9)** bzw. erste Rohrpaar **(8)** umgreifenden Schliesszustand bewegen lassen und miteinander verbindende Kupplungsorgane **(59')** aufweisen.

4. Werkzeugset nach zumindest einem der Ansprüche 1 bis 3, **dadurch gekennzeichnet, dass** der Vorschubmechanismus im Presswerkzeug **(6)** hydraulisch ausgebildet ist.

5. Werkzeugset nach zumindest einem der Ansprüche 2 bis 4, **dadurch gekennzeichnet, dass**
a) am ersten Inlay **(5)** jede der zwei Hälften **(51,52)** eine erste halbkreisförmige Aussparung **(55)** und eine zweite halbkreisförmige Aussparung **(56)** hat, wobei:
b) beide ersten halbkreisförmigen Aussparungen **(55,55)** und beide zweiten halbkreisförmigen Aussparungen **(56,56)** sich im Schliesszustand des ersten Inlays **(5)** jeweils zu einer Vollkreisaussparung ergänzen; und
c) jeweils eine der Vollkreisaussparungen in komplementärer Dimension in den äusseren Einschnitt **(28)** am jeweiligen Zwischenstück **(2)** der zwei Fittingbausätze **(1)** formschlüssig eingreift.

6. Werkzeugset nach Anspruch 5, **dadurch gekennzeichnet, dass**
a) am ersten Inlay **(5)** jede der zwei Hälften **(51,52)** zwischen der ersten halbkreisförmigen Aussparung **(55)** und der zweiten halbkreisförmigen Aussparung **(56)** einen Abstandssteg **(54)** hat;
b) die beiden Abstandsstege **(54)** der zwei Hälften **(51,52)** im Schliesszustand des ersten Inlays **(5)** zueinander gerichtet sind; wobei
c) der von einem Brückensteg **(71)** definierte Axialabstand zwischen den Rohrpaaren **(8,9)** und somit auch zwischen den zwei Fittingbausätzen **(1)** zu den beiden Abstandsstegen **(54)** der zwei Hälften **(51,52)** im Schliesszustand des ersten Inlays **(5)** äquivalent ist.

7. Werkzeugset nach zumindest einem der Ansprüche 2 bis 4, **dadurch gekennzeichnet, dass**
a) am zweiten Inlay (5') jede der zwei Hälften **(51',52')** eine erste halbkreisförmige Aussparung **(55')** und eine zweite halbkreisförmige Aussparung **(56')** hat, wobei:
b) beide ersten halbkreisförmigen Aussparungen **(55',55')** und beide zweiten halbkreisförmigen Aussparungen **(56',56')** sich im Schliesszustand des zweiten Inlays **(5')** jeweils zu einer Vollkreisaussparung ergänzen; und
c) beide Vollkreisaussparungen zusammen das erste Rohrstück **(81)** und das dritte Rohrstück **(82)** des ersten Rohrpaars **(8)** bzw. das zweite Rohrstück **(91)** und das vierte Rohrstück **(92)** des zweiten Rohrpaars **(9)** darauf axial vom Vorschubmechanismus im Presswerkzeug **(6)** verschiebbar umfassen.

8. Werkzeugset nach Anspruch 7, **dadurch gekennzeichnet, dass**
a) am zweiten Inlay **(5')** jede der zwei Hälften **(51',52')** zwischen der ersten halbkreisförmigen Aussparung **(55')** und der zweiten halbkreisförmigen Aussparung **(56')** einen Abstandssteg **(54')** hat;
b) die beiden Abstandsstege **(54')** der zwei Hälften **(51',52')** im Schliesszustand des zweiten Inlays **(5')** zueinander gerichtet sind; wobei
c) der von einem Brückensteg **(71)** definierte Axialabstand zwischen den Rohrpaaren **(8,9)** zu den beiden Abstandsstegen **(54')** der zwei Hälften **(51',52')** im Schliesszustand des zweiten Inlays **(5')** äquivalent ist.

9. Werkzeugset nach zumindest einem der Ansprüche 2 bis 8, **dadurch gekennzeichnet, dass** das Presswerkzeug **(6)** und das erste Inlay **(5)** und das zweite Inlay **(5')** sowie die Fittingbausätze **(1)** in deren Dimensionen äquivalent an die Rohrpaare **(8,9)** gestaltbar sind.

10. Werkzeugset nach zumindest einem der Ansprüche 1 bis 9, **dadurch gekennzeichnet, dass**
a) vom ersten Rohrpaar **(8)** das Rohrende **(810)** des ersten Rohrstücks **(81)** und das Rohrende **(820)** des dritten Rohrstücks **(82)** sowie vom zweiten Rohrpaar **(9)** das Rohrende **(910)** des zweiten Rohrstücks **(91)** und das Rohrende **(920)** des vierten Rohrstücks **(92)** zusammen mit den jeweils einzufügenden Fittingbausatz **(1)** bei der Herstellung der Pressverbindungen ohne Ummantelung **(76),** ohne von der Ummantelung **(76)** eingebetteter Isolation **(77)** und ohne eine Stütz-Verbindung **(72)** zwischen dem jeweiligen, in der Ummantelung **(76)** und Isolation **(77)** geführten Rohrpaar **(8,9)** verarbeitet wird; während
b) nach hergestellten Pressverbindungen zumindest die bisher fehlende Isolation **(77)** und die Ummantelung **(76)** am bisher freiliegenden Bereich, der sich vom ersten und dritten Rohrstück **(81,82)** über die beiden Fittingbausätze **(1)** bis zum zweiten und vierten Rohrstück **(91,92)** erstreckt, ergänzt wird.
